# EUROPEAN PATENT SPECIFICATION

(11) **EP 1 321 371 B1**
(45) Date of publication and mention of the grant of the patent: **07.03.2007**
(21) Application number: 02380170.7
(22) Date of filing: 30.07.2002
(51) Int. Cl.: B65D 30/08

(54) **Composite bag for molluscs**
Mollusktasche aus Verbundstoff
Sachet de composite pour des mollusques

(30) Priority: 20.12.2001 ES 200103066 U
(43) Date of publication of application: 25.06.2003
(73) Proprietor: Intermas Nets, S.A., 08450 Llinars del Vallès, (Barcelona) (ES)
(72) Inventor: Besas Camps, Luis, 08440 Cardedeu (Barcelona) (ES)
(74) Representative: Curell Aguilà, Marcelino

(56) References cited:
- EP-A- 0 802 120
- DE-A- 2 629 026
- GB-A- 191 413 144
- US-A- 4 503 559

## Description

This invention relates to a composite bag for mollusks, useable for the carriage, storage, distribution and sale of all kinds of mollusks, particularly mussels, comprising an outer bag and an inner bag housed in said outer bag, one of said bags being formed by a sheet-like mesh structure having openings.

It is known to use mesh bags, particularly of open mesh of the type made, preferably, by extrusion of a synthetic plastics material and, in certain cases, by weaving textile yarns of any nature, in which the span or opening of the mesh is sufficiently large for the mollusks, particularly mussels, to be in contact with the air, and to allow them to be kept moist, without storing water, which helps towards good conservation thereof in their handling until they reach the consumer.

Nevertheless, it has been proven that the mollusks packaged in such bags may be polluted by contact with floors of doubtful cleanliness, since the mollusks make contact through the openings of the mesh with bacteria or other pollutants on the floor on which the bags are placed, be it that of a refrigerated truck, of a storage chamber or of a market stall, with the pollution spreading to the remaining content.

With a view to overcoming this drawback, the applicant adopted the solution of including one or two flaps in the bottom seam of the bag, on which the bag rested when placed on the floor, whereby the bag was isolated from the floor and the possible pollution of the content thereof was avoided.

It has been observed, nevertheless, that such arrangement is not always effective, since in many cases the bags are laid flat on the floor, whereby such flaps cannot fulfill the purpose for which they were created.

Document GB-A-191413144 discloses a composite bag according to the preamble of independent claim 1, for the carriage of food, in particular figs, which comprises an outer bag made from a coarse wide meshed fabric and an inner bag made from a fine oil cloth or other damp-proof and dust-proof fine fabric. Such a bag is not permeable to water and then is not suitable for mollusks. Document DE-A-2629026 discloses a composite bag for collecting contaminated laundry, comprising an inner bag and an outer bag arranged in such a manner that the inner bag can be turned over, out of the outer bag, for extracting the contaminated laundry from the bag without need of shaking it. Such arrangement is not suitable to contain mollusks.

These limitations are overcome by the the composite bag of the present invention, which comprises an outer bag and an inner bag housed in said outer bag, one of said bags being formed by a sheet-like mesh structure having openings, caractherised in that the other bag is formed by a continuous sheet-like structure permeable to water, applied to said sheet-like mesh structure and which covers said openings preventing contact of the mollusks with surfaces external to said composite bag, said inner bag and said outer bag being attached one to another at least along one side of said composite bag and/or along the bottom of said composite bag.

In this way, the mesh are closed to pollution, without reducing the permeability thereof to air and water.

The invention contemplates that either said outer bag has the sheet-like mesh structure and said inner bag has the permeable continuous sheet-like structure, or said outer bag has the permeable continuous sheet-like structure and said inner bag has the sheet-like mesh structure.

Preferably according to the invention, said permeable continuous sheet-like structure is chosen from the group formed by: non-woven fabric, woven fabric, dense mesh, perforated surface plastic film and perforated surface paper sheet.

According to a further feature of the invention, said outer bag and said inner bag are formed by making-up independent sheet-like members.

Alternatively, according to the invention, said sheet-like mesh structure is fixedly attached to the permeable continuous sheet-like structure, forming a composite sheet-like structure that, on being made up, forms said composite bag.

Finally, the invention contemplates that at least one of said outer and inner bags is formed by an elongate tubular member, closed at one end.

To facilitate the understanding of the foregoing ideas, several embodiments are described of the composite bag for mollusks of the invention, with reference to the attached illustrative drawings, in which:
Figure 1 is a perspective view of a composite bag which does not form part of the invention, in which the outer bag is made from mesh and the inner bag is made from a permeable continuous sheet.
Figure 2 is a perspective view of the mouth of a composite bag according to the invention, formed by two tubular members.
Figure 3 is also a perspective view of a composite bag according to the invention, shown in the making-up process from two separate sheet-like members.

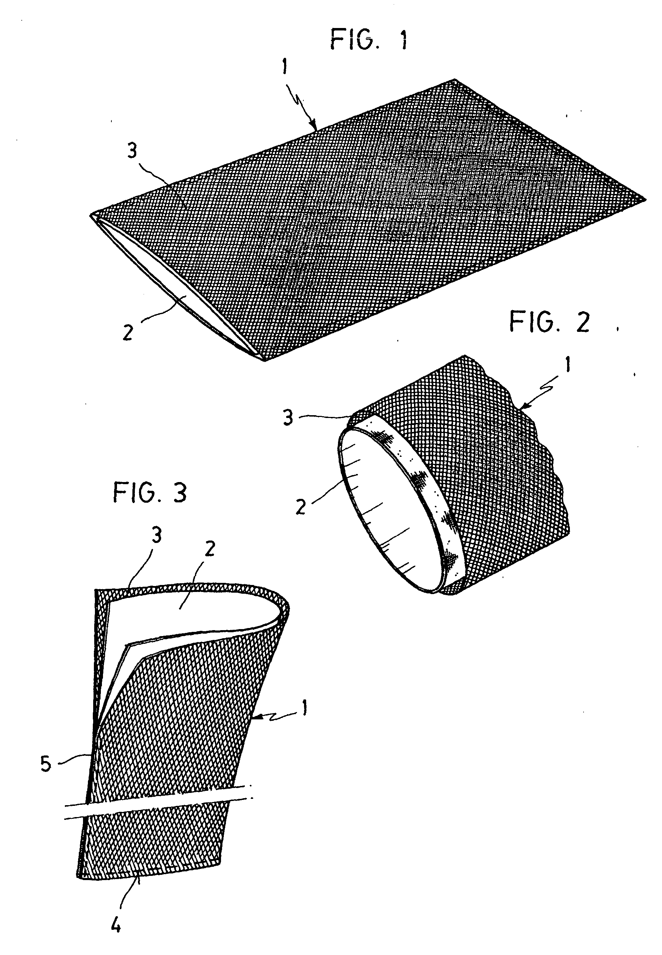

The composite bag 1 shown in Figure 1 consists of a simple embodiment in which an inner bag 2, made from a permeable continuous sheet, is housed within an outer bag 3, made from a mesh sheet having openings. In this case, both the inner 2 and outer 3 bags have been made up separately, according to conventional methods, and then one has been inserted in the other.

Figure 2 shows another embodiment of the composite bag 1, in which a tubular portion of permeable continuous sheet, produced directly by machine or made up, is axially inserted in a tubular portion of directly extruded mesh sheet, after which they are transversely connected by sewing or by heat-sealing to form the not shown bottom of the bag.

Figure 3 shows the composite bag 1 according to an alternative manufacturing method. This method consists of juxtapositioning a mesh sheet to a permeable continuous sheet, both having substantially identical dimensions, folding them over and forming an "L" shaped seam closing the bottom 4 and one side 5. An equivalent solution consists of folding the sheets to form a seamless bottom and sewing both sides.

A more advantageous method of manufacture consists of having a composite sheet formed by a mesh sheet fixedly incorporating a permeable continuous sheet, whereby only one sheet has to be handled to make the bag, allowing for mechanized production.

As stated above, the open mesh sheet will preferably be an extruded diamond or square plastics mesh, the latter type preferably stretched, without excluding other warp knitted meshes, formed on Raschel or Ketten machines, or meshes resulting from perforated, cut and unfolded or other sheets.

In turn, the permeable continuous sheet may consist of a textile fabric, a non-woven fabric, a perforated film or paper, a dense mesh, etc. It should finally be pointed out that the permeable continuous sheet bag could be the outer bag of the composite bag, while the mesh sheet bag would become the inner bag of said composite bag.

It is evident that with the present composite bag 1, it is possible to isolate the mollusks from contact pollution, at the same time as optimum conservation conditions thereof are maintained during the handling period thereof.

## Claims

1. A composite bag for mollusks, useable for the carriage, storage, distribution and sale of all kinds of mollusks, comprising an outer bag (3) and an inner bag (2) housed in said outer bag (3), one of said bags being formed by a sheet-like mesh structure having openings, the other bag being formed by a continuous sheet-like structure, applied to said sheet-like mesh structure and which covers said openings preventing contact of the mollusks with surfaces external to said composite bag, said inner bag (3) and said outer bag (2) being attached one to another at least along one side (5) of said composite bag and/or along the bottom (4) of said composite bag, **characterised in that** the continuous sheet-like structure is permeable to water.

2. The bag according to claim 1, **characterized in that** said outer bag (3) is made from a sheet-like mesh structure and said inner bag (2) is made from a permeable continuous sheet-like structure.

3. The bag according to claim 1, **characterized in that** said outer bag (3) is made from a permeable continuous sheet-like structure and said inner bag (2) is made from a sheet-like mesh structure.

4. The bag according to at least one of claims 1 to 3, **characterized in that** said permeable continuous sheet-like structure is chosen from the group formed by: non-woven fabric, woven fabric, dense mesh, perforated surface plastic film and perforated surface paper sheet.

5. The bag according to at least one of claims 1 to 4, **characterized in that** said outer bag (3) and said inner bag (2) are formed by making-up independent sheet-like members.

6. The bag according to at least one of claims 1 and 2, **characterized in that** said sheet-like mesh structure is fixedly incorporated to the permeable continuous sheet-like structure, forming a composite sheet-like structure which, on being made up, forms said composite bag (1).

7. The bag according to at least one of claims 1 to 6, **characterized in that** said sheet-like mesh structure having openings and said continuous sheet-like structure permeable to water are juxtaposed, folded over and seamed by an "L" shaped seam forming one side (5) and the bottom (4) of the bag.

8. The bag according to at least one of claims 1 to 3, **characterized in that** at least one of said outer (3) and inner (2) bags is formed by an elongate tubular member, closed at one end.

9. Use of a composite bag according to any of claims 1 to 8 for containing mollusks, so that the mollusks are in contact with the air through said inner bag (3) and said outer bag (2) and are prevented by said continous sheet-like structure, which forms the inner bag (2) or the outer bag (3), to be in direct contact with surfaces external to the composite bag, without storing water.

## Patentansprüche

1. Verbundstoffbeutel für Mollusken, der zum Tragen, Aufbewahren, Versand und Verkauf aller Arten von Mollusken geeignet ist, umfassend einen Außenbeutel (3) und einen Innenbeutel (2), der in dem Außenbeutel (3) untergebracht ist, wobei einer der Beutel durch eine bahnförmige Netzstruktur mit Öffnungen gebildet ist, wobei der andere Beutel durch eine kontinuierliche bahnförmige Struktur gebildet ist, die auf der bahnförmigen Netzstruktur angelegt ist und die die Öffnungen bedeckt, so dass Kontakt der Mollusken mit Oberflächen außerhalb des Verbundstoffbeutels vermieden wird, wobei der Innenbeutel (2) und der Außenbeutel (3) mindestens entlang einer Seite (5) des Verbundstoffbeutels und/oder entlang der Unterseite (4) des Verbundstoffbeutels miteinander verbunden sind, **dadurch gekennzeichnet, dass** die kontinuierliche bahnförmige Struktur für Wasser durchlässig ist.

2. Beutel nach Anspruch 1, **dadurch gekennzeichnet, dass** der Außenbeutel (3) aus einer bahnförmigen Netzstruktur gebildet ist und der Innenbeutel (2) aus einer durchlässigen kontinuierlichen bahnförmigen Struktur gebildet ist.

3. Beutel nach Anspruch 1, **dadurch gekennzeichnet, dass** der Außenbeutel (3) aus einer durchlässigen kontinuierlichen bahnförmigen Struktur gebildet ist und der Innenbeutel (2) aus einer bahnförmigen Netzstruktur gebildet ist.

4. Beutel nach mindestens einem der Ansprüche 1 bis 3, **dadurch gekennzeichnet, dass** die durchlässige kontinuierliche bahnförmige Struktur ausgewählt ist aus der Gruppe bestehend aus: Vliesstoff, Gewebe, dichtem Netz, perforierter Kunststofffolie und perforierter Papierbahn.

5. Beutel nach mindestens einem der Ansprüche 1 bis 4, **dadurch gekennzeichnet, dass** der Außenbeutel (3) und der Innenbeutel (2) durch Zusammensetzen unabhängiger bahnförmiger Elemente gebildet sind.

6. Beutel nach mindestens einem der Ansprüche 1 und 2, **dadurch gekennzeichnet, dass** die bahnförmige Netzstruktur fest an der durchlässigen kontinuierlichen bahnförmigen Struktur angebracht ist, so dass eine bahnförmige Verbundstruktur ausgebildet ist, die beim Zusammensetzen den Verbundstoffbeutel (1) bildet.

7. Beutel nach mindestens einem der Ansprüche 1 bis 6, **dadurch gekennzeichnet, dass** die bahnförmige Netzstruktur mit Öffnungen und die für Wasser durchlässige kontinuierliche bahnförmige Struktur aneinandergelegt, gefaltet und mit einem "L"-förmigen Saum gesäumt sind, der eine Seite (5) und die Unterseite (4) des Beutels bildet.

8. Beutel nach mindestens einem der Ansprüche 1 bis 3, **dadurch gekennzeichnet, dass** mindestens einer von Außenbeutel (3) und Innenbeutel (2) durch ein langgestrecktes schlauchförmiges Element gebildet ist, das an einem Ende verschlossen ist.

9. Verwendung eines Verbundstoffbeutels nach einem der Ansprüche 1 bis 8 zum Aufnehmen von Mollusken, so dass die Mollusken durch den Außenbeutel (3) und den Innenbeutel (2) mit der Luft in Kontakt sind und durch die kontinuierliche bahnförmige Struktur, die den Innenbeutel (2) oder den Außenbeutel (3) bildet, verhindert ist, dass sie in direkten Kontakt mit Oberflächen außerhalb des Verbundstoffbeutels kommen, ohne dass Wasser eingelagert wird.

## Revendications

1. Sac composite pour mollusques apte à être utilisé pour le transport, le stockage, la distribution et la vente de tous types de mollusques, comprenant un sac extérieur (3) et un sac intérieur (2) logé dans ledit sac extérieur (3), un desdits sacs étant formé par une structure à mailles en forme de feuille ayant des ouvertures, l'autre sac étant formé par une structure continue en forme de feuille appliquée à ladite structure à mailles en forme de feuille et qui couvre lesdites ouvertures, empêchant le contact des mollusques avec les surfaces extérieures audit sac composite, ledit sac intérieur (3) et ledit sac extérieur (2) étant fixés l'un à l'autre au moins le long d'un côté (5) dudit sac composite et/ou le long du fond (4) dudit sac composite, **caractérisé en ce que** la structure en forme de feuille continue est perméable à l'eau.

2. Sac selon la revendication 1, **caractérisé en ce que** ledit sac extérieur (3) est réalisé à partir d'une structure à mailles en forme de feuille et ledit sac intérieur (2) est réalisé à partir d'une structure en forme de feuille continue perméable.

3. Sac selon la revendication 1, **caractérisé en ce que** ledit sac extérieur (3) est réalisé à partir d'une structure en forme de feuille continue perméable et ledit sac intérieur (2) est réalisé à partir d'une structure à mailles en forme de feuille.

4. Sac selon au moins une des revendications 1 à 3, **caractérisé en ce que** ladite structure en forme de feuille continue perméable est choisie dans le groupe formé par un tissu non tissé, un tissu tissé, un treillis dense, un film en matière plastique à surface perforée et une feuille en papier à surface perforée.

5. Sac selon au moins une des revendications 1 à 4, **caractérisé en ce que** ledit sac extérieur (3) et ledit sac intérieur (2) sont formés en réalisant des éléments en forme de feuille indépendants.

6. Sac selon au moins une des revendications 1 et 2, **caractérisé en ce que** ladite structure à mailles en forme de feuille est incorporée fixement dans la structure en forme de feuille continue perméable en formant une structure en forme de feuille composite qui lorsqu'elle est réalisée forme ledit sac composite (1).

7. Sac selon au moins une des revendications 1 à 6, **caractérisé en ce que** ladite structure à mailles en forme de feuille ayant des ouvertures et ladite structure en forme de feuille continue perméable à l'eau sont juxtaposées, pliées et réunies par couture par une couture en forme de "L" formant un côté (5) et le fond (4) du sac.

8. Sac selon au moins une des revendications 1 à 3, **caractérisé en ce qu'**au moins l'un dudit sac extérieur (3) et dudit sac intérieur (2) est formé par un élément tubulaire allongé, fermé à une extrémité.

9. Utilisation d'un sac composite selon l'une quelconque des revendications 1 à 8, pour contenir des mollusques de sorte que les mollusques sont en contact avec l'air au travers dudit sac intérieur (3) et dudit sac extérieur (2) et sont empêchés par ladite structure en forme de feuille continue qui forme le sac intérieur (2) ou le sac extérieur (3) d'être en contact direct avec les surfaces externes au sac composite sans stockage d'eau.
